# EUROPEAN PATENT APPLICATION

(11) **EP 4 564 935 A1**
(43) Date of publication of application: **04.06.2025**
(21) Application number: 23849015.5
(22) Date of filing: 29.05.2023
(51) Int. Cl.: H04W 52/02

(54) **ENERGY-SAVING METHOD AND RELATED APPARATUS**

(30) Priority: 30.07.2022 CN 202210912704
(71) Applicant: Huawei Technologies Co., Ltd., Shenzhen, Guangdong 518129 (CN)
(72) Inventor: YANG, Qi, Shenzhen, Guangdong 518129 (CN); ZHANG, Chao, Shenzhen, Guangdong 518129 (CN); GU, Yu, Shenzhen, Guangdong 518129 (CN)
(74) Representative: Gill Jennings & Every LLP
(86) International application number: PCT/CN2023/096751
(87) International publication number: WO 2024/027305

(57) **Abstract**

This application discloses an energy-saving method and a related apparatus, applied to an energy-saving scenario of a base station. The method includes: A network device determines target symbols in a multimedia broadcast multicast service single frequency network MBSFN subframe of a first cell. The target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE. When load of the first cell is lower than a preset threshold, the network device reduces transmit powers of the target symbols. When the load of the first cell is higher than the preset threshold, the network device increases the transmit powers of the target symbols. In this application, an overall transmit power of a cell is adjusted by simultaneously adjusting transmit powers of four types of symbols, and a UE does not need to be notified through an air interface message. Therefore, the overall transmit power of the cell can be quickly adjusted, and service stability of the base station can be ensured while energy saving is implemented.

## Description

This application claims priority to Chinese Patent Application No. CN202210912704.0, filed with the China National Intellectual Property Administration on July 30, 2022 and entitled "ENERGY-SAVING METHOD AND RELATED APPARATUS", which is incorporated herein by reference in its entirety.

### TECHNICAL FIELD

This application relates to the communication field, and in particular, to an energy-saving method and a related apparatus.

### BACKGROUND

With the development of communication technologies, long term evolution (Long Term Evolution, long term evolution) has become a mainstream wireless communication standard, and carries a large amount of data and a large quantity of voice services. Evolved NodeBs (evolved NodeBs, eNBs) account for a large proportion of base stations of all operators and are an important revenue source of the operators. However, energy consumption of the massive eNBs also accounts for a high proportion of energy consumption of the operators. Therefore, the operators are eager to further reduce energy consumption of an eNB.

A method for reducing the energy consumption of the eNB is to reduce a transmit power of a cell when the cell of the eNB has low load, thereby reducing the energy consumption of the eNB. For the cell of the eNB, a cell-specific reference signal (Cell-specific Reference Signal, CRS) occupies a large quantity of air interface resources, and in a low-load time period, the CRS consumes a large amount of energy. Therefore, to reduce the transmit power of the cell, a transmit power of the CRS needs to be reduced first.

Currently, a common manner of reducing the transmit power of the CRS is to fixedly reduce a CRS power configuration of the cell. However, reducing a transmit power of a CRS symbol causes a change in a power bias difference, which is inconsistent with the power bias difference previously notified to a UE. The UE cannot cope with this situation. Therefore, in this manner, the terminal device needs to be notified of the change of the power bias difference in advance through an air interface message. However, response time of the air interface message is usually long, and is at a level of hundreds of milliseconds or even a level of seconds. Consequently, the transmit power of the CRS cannot be quickly adjusted. When load of the cell increases rapidly, the transmit power of the CRS cannot be restored in a timely manner. That is, the response time cannot adapt to a rapid traffic change.

### SUMMARY

This application provides an energy-saving method and a related apparatus, to quickly adjust a transmit power of a cell.

A network device determines target symbols in a multimedia broadcast multicast service single frequency network (Multimedia Broadcast Multicast Service Single Frequency Network, MBSFN) subframe of a first cell. The target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE. When load of the first cell is lower than a preset threshold, the network device reduces transmit powers of the target symbols. When the load of the first cell is higher than the preset threshold, the network device increases the transmit powers of the target symbols.

An energy-saving method provided in the first aspect is applicable to a frequency division duplex (frequency division duplex, FDD) mode and a time division duplex (time division duplex, TDD) mode. In the FDD mode, subframes 0, 4, 5, and 9 are non-MBSFN subframes constantly. In other words, MBSFN subframes may be subframes 1, 2, 3, 6, 7, and 8. In the TDD mode, when an uplink-downlink subframe configuration is 1, the MBSFN subframes may occupy the subframes 4 and 9. When the uplink-downlink subframe configuration is 2, the MBSFN subframes may occupy the subframes 3, 4, 8, and 9. When the uplink-downlink subframe configuration is 5, the MBSFN subframes may occupy the subframes 3, 4, 7, 8, and 9. In addition, the subframes 2 and 7 may be uplink subframes. Therefore, the subframes 0, 1, 5, and 6 are normal subframes constantly, so that the MBSFN subframes may be downlink subframes in the subframes 3, 4, 7, 8, and 9.

The network device may monitor an instantaneous load status of the first cell in real time (for example, at a millisecond level), where the status includes, but is not limited to, uplink service load, downlink service load, a data buffer size, a quantity of users, and the like. When the load of the first cell is lower than the preset threshold, it indicates that the first cell is in a low-traffic state. In this case, the first cell does not need a transmit power in a normal state, and the network device reduces a transmit power of the first cell by reducing the transmit powers of the target symbols. When the network device detects, by monitoring, that the load of the first cell is higher than the preset threshold, it indicates that a service requirement of the first cell increases, and the network device increases the transmit powers of the target symbols, and restores the transmit powers of the target symbols to states before power reduction. Certainly, the network device may alternatively further increase the transmit powers of the target symbols based on an actual load status of the first cell. For example, when the load of the first cell is much higher than the preset threshold, the network device may increase the powers of the target symbols more, instead of merely restoring the transmit powers of the target symbols to levels before the power reduction.

Specifically, a method for adjusting (including reducing and increasing) the transmit powers of the target symbols by the network device is simultaneously adjusting transmit powers of four types of symbols: the cell-specific reference signal CRS symbol, the demodulation modulation reference signal (Demodulation Modulation Reference Signal, DMRS) symbol, the physical downlink control channel (Physical Downlink Control Channel, PDCCH) symbol dedicated to the terminal device (user equipment, UE), and the physical downlink shared channel PDSCH (Physical Downlink Shared Channel, PDSCH) symbol dedicated to the UE.

In the first aspect of this application, the network device adjusts the transmit power of the cell by simultaneously adjusting the transmit powers of the four types of symbols: the CRS symbol, the DMRS symbol, the PDCCH symbol dedicated to the UE, and the PDSCH symbol dedicated to the UE. When the powers of these symbols are adjusted together, the UE can normally understand the power adjustment, and the UE can normally process services. Therefore, an overall transmit power of the cell can be quickly adjusted in a case in which the MBSFN subframe does not need to be specially configured in the first cell, and the UE does not need to be notified, through an air interface message (for example, a system message or radio resource control (Radio Resource Control, RRC) signaling), that the transmit power of the first cell is reduced. Therefore, according to the energy-saving method provided in the first aspect of this application, a service fluctuation change of a cell can be quickly followed, and stable user experience can be ensured while energy saving is implemented.

In a possible implementation of the first aspect, the MBSFN subframe does not carry a system information block (System Information Block, SIB) message, a paging Paging message, a message 2 (message 2, MSG2), or a message 4 (message 4, MSG4) of the first cell. In this possible implementation, that the MBSFN subframe in which the target symbols are located does not carry a cell common message is limited. When the MBSFN subframe is used for carrying the cell common message, transmit powers of all symbols in the subframe are not reduced. That is, none of the symbols is the target symbol. Therefore, normal implementation of basic functions such as receiving a paging message and initiating an access request by the UE is not affected.

In a possible implementation of the first aspect, the target symbols do not include symbols in a physical control format indicator channel (Physical Control Format Indicator Channel, PCFICH) and a physical hybrid automatic repeat indicator channel (Physical Hybrid ARQ Indicator Channel, PHICH), or a common PDCCH symbol and a channel state reference signal (Channel State Information Reference Signal, CSIRS) symbol of the cell. In this possible implementation, specific content of the target symbols is limited, so that implementation of the basic functions of the cell may not be affected.

In a possible implementation of the first aspect, the PDSCH symbol does not include a voice over long-term evolution (Voice over Long-Term Evolution, VoLTE) symbol, a signaling radio bearer 1 (Signal Radio Bear 1, SRB1) symbol, or a signaling radio bearer 2 (Signal Radio Bear 1, SRB2) symbol. In this possible implementation, specific content of the target symbols is limited, so that implementation of the basic functions of the cell may not be affected.

In a possible implementation of the first aspect, the CRS symbol is located outside a position of a symbol 0 of the MBSFN subframe.

In some cases, a UE in a neighbouring cell of the first cell uses a CRS symbol at the position of the symbol 0 in the MBSFN subframe to measure coverage strength of the first cell, for example, to measure a reference signal received power (Reference signal received power, RSRP) or reference signal received quality (Reference signal received Quality, RSRQ). In this possible implementation, that the CRS symbol included in the target symbols is located outside the position of the symbol 0 of the MBSFN subframe is limited. Therefore, reducing the transmit powers of the target symbols does not affect a result of measuring coverage of the first cell by the UE in the neighbouring cell, and does not affect mobility functions such as reselection and handover of the UE in the neighbouring cell to a current cell.

In a possible implementation of the first aspect, the method further includes: The network device sends a target message to a second cell. The target message indicates that an evolved multimedia broadcast multicast service eMBMS cell is present in a neighbouring cell that has a handover relationship with the second cell, and for the second cell, the neighbouring cell of the second cell also includes the first cell.

The network device notifies the neighbouring cell (namely, the second cell) of the first cell, through a forged message (namely, the target message), that an evolved multimedia broadcast multicast service (Evolved Multimedia Broadcast Multicast Service, eMBMS) neighbouring cell is present peripherally. After the second cell learns that the eMBMS neighbouring cell is present, the second cell notifies, through a system message, a UE in the second cell, so that when measuring a signal of the neighbouring cell, the UE in the second cell measures only a CRS symbol that is in a non-MBSFN subframe of the neighbouring cell. The network device does not reduce a transmit power of a symbol that is in a non-MBSFN subframe of the first cell. Therefore, before and after the network device adjusts the transmit power of the first cell, strength that is of a signal, that is of the first cell, and that is obtained, through measurement, by the UE in the second cell does not change, thereby ensuring that mobility functions such as reselection and handover of the UE in the second cell for the first cell can remain normal.

In a possible implementation of the first aspect, before the step that the network device reduces transmit powers of the target symbols, the method further includes: The network device determines that strength of a signal received by a UE in the first cell is higher than a target threshold of the first cell. The target threshold is higher than a minimum access level threshold of the first cell.

That the network device reduces transmit powers of the target symbols causes a decrease in coverage signal strength of the first cell, and may cause a UE that is originally located near an edge area of the first cell to trigger an inter-frequency/inter-system cell handover in advance, which causes a KPI risk such as a traffic loss or a call drop. To avoid this case as much as possible, the network device sets a target threshold. The target threshold is higher than the minimum access level threshold of the first cell. The network device reduces the transmit powers of the target symbols only when strength of all signals of UEs connected to the first cell is higher than the target threshold. When strength of a signal of a UE is lower than the target threshold, the network device stops reducing the transmit powers of the target symbols, so that the coverage signal strength of the first cell is no longer reduced. When the strength of the signal of the UE is higher than the target threshold again, the network device may continue to reduce the transmit powers, to ensure that the UE does not trigger, due to the decrease in the coverage signal strength, an inter-frequency or inter-system handover in advance, thereby avoiding the KPI risk such as the traffic loss or the call drop.

In a possible implementation of the first aspect, after the step that the network device reduces transmit powers of the target symbols, the method further includes: The network device calculates a compensation amount of a reference signal received power RSRP or a compensation amount of reference signal received quality RSRQ of the first cell. The network device compensates, based on the compensation amount of the RSRP or the compensation amount of the RSRQ, the RSRP or the RSRQ reported by the UE in the first cell.

That the network device reduces transmit powers of the target symbols causes a decrease in the coverage signal strength of the first cell, and causes the UE to trigger an intra-frequency cell handover in advance. To avoid, as much as possible, a KPI risk such as a traffic loss or a call drop caused because the UE is handed over to another intra-frequency cell in advance, the network device calculates the compensation amount of the RSRP or the compensation amount of the RSRQ of the first cell based on a reduced transmit power, and performs, based on the compensation amount, compensation repair on an RSRP or RSRQ value reported by the UE. The RSRP or RSRQ value is carried in an intra-frequency handover request event. If the strength of the signal of the UE in the first cell after the compensation repair actually does not meet an intra-frequency handover threshold requirement, the network device does not perform handover of the UE. Only if the strength of the signal of the UE in the first cell after the compensation repair is low indeed, and can meet an intra-frequency handover threshold requirement, the network device actually performs handover of the UE. In this possible implementation, the network device may perform compensation repair on the strength of the signal of the first cell, to avoid, as much as possible, a case in which the UE in the first cell is handed over to another intra-frequency cell in advance, and avoid the KPI risk such as the traffic loss or the call drop.

In a possible implementation of the first aspect, the network device reduces the minimum access level threshold of the first cell based on the compensation amount of the RSRP or the compensation amount of the RSRQ.

In a possible implementation of the first aspect, the method further includes: The network device reduces the minimum access level threshold of the first cell based on the compensation amount of the RSRP or the compensation amount of the RSRQ.

A minimum access level threshold is set for each cell. When the RSRP or RSRQ that is of the first cell and that is obtained by the UE in an idle state through measurement is less than the access level threshold, the UE in the idle state cannot measure a network signal. In view of this, the network device obtains the compensation amount of the RSRP or the compensation amount of the RSRQ of the first cell, and reduces the minimum access level threshold of the first cell based on the compensation amount of the RSRP or the compensation amount of the RSRQ, to ensure that the UE in the idle state is not disconnected from the network when the transmit power of the first cell is reduced. This prevents losses of traffic and users.

A second aspect of this application provides a communication apparatus, including a determining module, a reducing module, and an increasing module. The determining module is configured to determine target symbols in a multimedia broadcast multicast service single frequency network MBSFN subframe of a first cell. The target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE. The reducing module is configured to reduce transmit powers of the target symbols when load of the first cell is lower than a preset threshold. The increasing module is configured to increase the transmit powers of the target symbols when the load of the first cell is higher than the preset threshold.

In a possible implementation of the second aspect, the MBSFN subframe does not carry a system information block SIB message, a paging Paging message, a message 2 MSG2, or a message 4 MSG4 of the first cell.

In a possible implementation of the second aspect, the target symbols do not include symbols in a physical control format indicator channel PCFICH and a physical hybrid automatic repeat indicator channel PHICH, or a common PDCCH symbol and a channel state reference signal CSIRS symbol of the first cell.

In a possible implementation of the second aspect, the PDSCH symbol does not include a voice over long-term evolution VoLTE symbol, a signaling radio bearer 1 SRB1 symbol, or a signaling radio bearer 2 SRB2 symbol.

In a possible implementation of the second aspect, the CRS symbol is located outside a position of a symbol 0 of the MBSFN subframe.

In a possible implementation of the second aspect, the communication apparatus further includes a sending module, configured to send a target message to a second cell. The target message indicates that an evolved multimedia broadcast multicast service eMBMS cell is present in a neighbouring cell that has a handover relationship with the second cell, and the neighbouring cell includes the first cell.

In a possible implementation of the second aspect, the determining module is further configured to determine that strength of a signal received by a UE in the first cell is higher than a target threshold of the first cell. The target threshold is higher than a minimum access level threshold of the first cell.

In a possible implementation of the second aspect, the communication apparatus further includes a calculation module, configured to: calculate a compensation amount of a reference signal received power RSRP or a compensation amount of reference signal received quality RSRQ of the first cell; and compensate, based on the compensation amount of the RSRP or the compensation amount of the RSRQ, the RSRP or the RSRQ reported by the UE in the first cell.

In a possible implementation of the second aspect, the reducing module is further configured to reduce the minimum access level threshold of the first cell based on the compensation amount of the RSRP or the compensation amount of the RSRQ.

The communication apparatus provided in the second aspect of this application is configured to perform the method according to the first aspect or any possible implementation of the first aspect.

A third aspect of this application further provides a communication apparatus, including a processor and a memory. The memory is configured to store instructions. The processor is configured to obtain the instructions stored in the memory, to perform the method according to the first aspect or any possible implementation of the first aspect.

A fourth aspect of this application provides a computer-readable storage medium. The computer-readable storage medium includes instructions. When the instructions are run on a computer, the computer is enabled to perform the method according to the first aspect or any possible implementation of the first aspect.

A fifth aspect of this application provides a computer program product including instructions. When the computer program product is run on a computer, the computer is enabled to perform the method according to the first aspect or any possible implementation of the first aspect.

A sixth aspect of this application provides a chip system. The chip system includes at least one processor and a communication interface. The communication interface and the at least one processor are interconnected through a line. The at least one processor is configured to run a computer program or instructions, to perform the method according to the first aspect or any possible implementation of the first aspect.

### BRIEF DESCRIPTION OF DRAWINGS

FIG. 1 is a diagram of an architecture of a communication system to which an embodiment of this application is applied;
FIG. 2 is a diagram of an embodiment of an energy-saving method according to an embodiment of this application;
FIG. 3 is a diagram of another embodiment of an energy-saving method according to an embodiment of this application;
FIG. 4 is a diagram of a structure of a communication apparatus according to an embodiment of this application;
FIG. 5 is a diagram of another structure of a communication apparatus according to an embodiment of this application; and
FIG. 6 is a diagram of another structure of a communication apparatus according to an embodiment of this application.

### DESCRIPTION OF EMBODIMENTS

Embodiments of this application provide an energy-saving method and a related apparatus, to quickly adjust a transmit power of a cell. Embodiments of this application further provide a corresponding computer-readable storage medium, a computer program product, and the like. The following provides detailed descriptions.

The following describes embodiments of this application with reference to the accompanying drawings. Apparently, the described embodiments are merely some rather than all of embodiments of this application. A person of ordinary skill in the art may know that with the development of technologies and emergence of new scenarios, the technical solutions provided in embodiments of this application are also applicable to resolving similar technical problems.

In the specification, claims, and accompanying drawings of this application, the terms such as "first" and "second" are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "have", and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

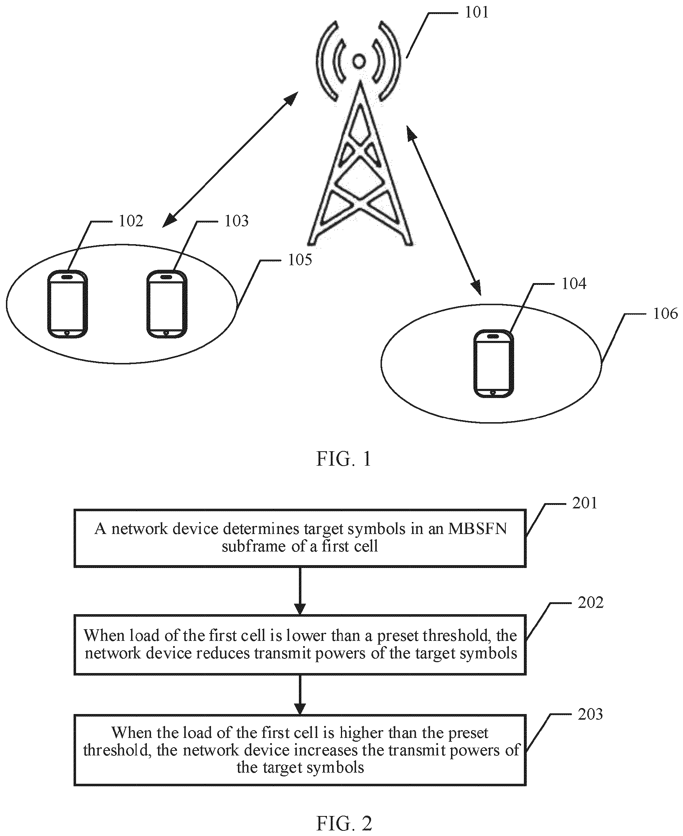

FIG. 1 is a diagram of an architecture of a communication system according to an embodiment of this application.

The communication system includes a network device 101 and terminal devices 102, 103, and 104. The network device 101 may manage one or more cells, such as a cell 105 and a cell 106 shown in FIG. 1. Different cells have different coverage signal strength and frequency domain resources. The network device 101 communicates with the terminal devices 102 and 103 through a wireless transmission resource of the cell 105, and communicates with the terminal device 104 through a wireless transmission resource of the cell 106. When a handover is triggered, the terminal device 102 may be handed over to the cell 106 for connection, and the terminal device 104 may alternatively be handed over to the cell 105 for connection. It may be understood that FIG. 1 is merely an example. In an actual application, a quantity of network devices and a quantity of terminal devices are not limited thereto. The network device 101 may alternatively manage more cells or manage only one cell. This is not specifically limited herein.

The terminal devices 102, 103, and 104 may be devices having wireless transmitting and receiving functions or a chip that may be disposed in any device. The terminal device may be deployed on land, including an indoor device, an outdoor device, a handheld device, and/or an in-vehicle device, may be deployed on a water surface (for example, on a ship), or may be deployed in the air (for example, on an airplane, a balloon, or a satellite). The terminal device may also be referred to as a user equipment (user equipment, UE), and includes a handheld device, an in-vehicle device, a wearable device, or a computing device that has a wireless communication function. For example, the terminal device may be a mobile phone (mobile phone), a tablet computer (Pad), or a computer with a wireless transceiver function, or may be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), and/or the like.

The network device 101 may be a device that is deployed in a radio access network and that can perform wireless communication with the terminal device, for example, an evolved base station eNB in an LTE system, a next generation base station (next Generation NodeB, gNB) in a new radio (new radio, NR) system, or a base station (base transceiver station, BTS) in a global system for mobile communications (global system for mobile communications, GSM) system or code division multiple access (code division multiple access, CDMA).

Currently, energy consumption caused by the network device 101 accounts for a large proportion in the entire communication system. To reduce energy consumption, a transmit power of the network device 101 needs to be reduced. Specifically, a transmit power of the cell 105 or the cell 106 may be reduced. However, currently, during reduction of the transmit power of the cell, response time is long, and cannot adapt to a rapid change (generally, at a level of 10 milliseconds) of a communication service. In view of this, an embodiment of this application provides an energy-saving method, to quickly adjust the transmit power of the cell.

It should be noted that the energy-saving method provided in embodiments of this application is applicable to various communication systems, for example, a long term evolution (long term evolution, LTE) system, an LTE frequency division duplex system, an LTE time division duplex system, a new radio (new radio, NR) system, a future communication system (for example, a 6th generation (6th generation, 6G) communication system), or a system integrating a plurality of communication systems. For ease of writing, an LTE FDD system and an LTE TDD system are used as an example for description in embodiments of this application. This is not specifically limited herein.

FIG. 2 is a diagram of an embodiment of an energy-saving method according to an embodiment of this application. As shown in FIG. 2, the energy-saving method in this embodiment includes step 201 to step 203.

201: A network device determines target symbols in an MBSFN subframe of a first cell.

The network device first determines the target symbols. The target symbols are located in the MBSFN subframe, and the target symbols are a CRS symbol, a DMRS symbol, a PDCCH symbol dedicated to a UE, and a PDSCH symbol dedicated to the UE.

The energy-saving method provided in this embodiment is applicable to an LTE FDD mode and an LTE TDD mode. In the FDD mode, subframes 0, 4, 5, and 9 are non-MBSFN subframes constantly, so that MBSFN subframes may be subframes 1, 2, 3, 6, 7, and 8. In the TDD mode, when an uplink-downlink subframe configuration is 1, the MBSFN subframes may occupy the subframes 4 and 9. When the uplink-downlink subframe configuration is 2, the MBSFN subframes may occupy the subframes 3, 4, 8, and 9. When the uplink-downlink subframe configuration is 5, the MBSFN subframes may occupy the subframes 3, 4, 7, 8, and 9. In addition, the subframes 2 and 7 may be uplink subframes. Therefore, the subframes 0, 1, 5, and 6 are normal subframes constantly, so that the MBSFN subframes may be downlink subframes in the subframes 3, 4, 7, 8, and 9.

Optionally, to prevent normal implementation of basic functions of a cell from being affected during reduction of transmit powers of the target symbols, the MBSFN subframe in which the target symbols are located cannot carry a SIB message or a paging (Paging) message. In addition, the MBSFN subframe cannot carry a message 2 (message 2, MSG2) or a message 4 (message 4, MSG4) used for UE access. When the MBSFN subframe is used for carrying a common message of the cell, transmit powers of all symbols in the subframe are not reduced, that is, none of the symbols is a target symbol.

Optionally, the PDSCH symbol that is determined as the target symbol does not include a VoLTE symbol, an SRB 1 symbol, or an SRB2 symbol.

In some possible solutions, a CRS symbol at a position of a symbol 0 in the MBSFN subframe is used by a UE in a neighbouring cell to measure coverage signal strength of the first cell, for example, to measure an RSRP or RSRQ of the first cell. Therefore, the target symbols may alternatively not be all CRS symbols in the MBSFN subframe, but are CRS symbols in the MBSFN subframe other than a symbol at the position of the symbol 0.

Optionally, the target symbols do not include a symbol that is in a PCFICH or a symbol that is in a PHICH. In addition, the target symbols do not include a common PDCCH symbol or a CSIRS symbol of the cell.

It should be noted that the energy-saving method provided in this embodiment is applicable to processing of CRS symbols of all ports (Ports) in the first cell.

202: When load of the first cell is lower than a preset threshold, the network device reduces the transmit powers of the target symbols.

The network device may monitor an instantaneous load status of the first cell in real time, where the status includes, but is not limited to, uplink service load, downlink service load, a data buffer size, a quantity of users, and the like. When the load of the first cell is lower than the preset threshold, it indicates that the first cell is in a low-traffic state. In this case, the first cell does not need a transmit power in a normal service state, and the network device reduces a transmit power of the first cell by reducing the transmit powers of the target symbols.

Specifically, a method for adjusting (including reducing and increasing) the transmit powers of the target symbols by the network device is simultaneously adjusting transmit powers of four types of symbols: the CRS symbol, the DMRS symbol, the PDCCH symbol dedicated to the UE, and the PDSCH symbol dedicated to the UE.

It should be noted that, in this embodiment, the network device adjusts the transmit power of the cell by simultaneously adjusting the transmit powers of the four types of symbols: the CRS symbol, the DMRS symbol, the PDCCH symbol dedicated to the UE, and the PDSCH symbol dedicated to the UE. When the powers of these symbols are adjusted together, the UE can normally understand the power adjustment, and the UE can normally process services. Therefore, the MBSFN subframe does not need to be specially configured in the first cell, and the UE does not need to be notified, through an air interface message, that the transmit power of the first cell is reduced. Therefore, in this embodiment, when the network device monitors the instantaneous load status of the first cell, a status determining periodicity may be several milliseconds to dozens of milliseconds. In a currently commonly used power reduction method, because a parameter configuration of a cell needs to be modified, response time is long (at a level of more than second (s)), and a damage to coverage and user experience is much more serious compared with that in this embodiment.

203: When the load of the first cell is higher than the preset threshold, the network device increases the transmit powers of the target symbols.

When the network device detects, by monitoring, that the load of the first cell is higher than the preset threshold, it indicates that a service requirement of the first cell is restored to a normal state, and the network device increases the transmit powers of the target symbols, and restores the transmit powers of the target symbols to states before power reduction. Certainly, the network device may alternatively adjust the transmit powers of the target symbols based on an actual load status of the first cell. For example, when the load of the first cell is much higher than the preset threshold, the network device may increase the powers of the target symbols more, instead of merely restoring the transmit powers of the target symbols to levels before the power reduction.

In this embodiment, the network device adjusts the transmit power of the cell by simultaneously adjusting the transmit powers of the four types of symbols: the CRS symbol, the DMRS symbol, the PDCCH symbol dedicated to the UE, and the PDSCH symbol dedicated to the UE. When the powers of these symbols are adjusted together, the UE can normally understand the power adjustment, and the UE can normally process services. Therefore, an overall transmit power of the cell can be quickly adjusted in a case in which the MBSFN subframe does not need to be specially configured in the first cell, and the UE does not need to be notified, through an air interface message (for example, a system message or radio resource control (Radio Resource Control, RRC) signaling), that the transmit power of the first cell is reduced. Therefore, according to the energy-saving method provided in the first aspect of this application, a service fluctuation change of a cell can be quickly followed, and stable user experience can be ensured while energy saving is implemented. In addition, in this embodiment, specific content of the target symbols is limited, so that the normal implementation of the basic functions such as receiving a paging message and initiating an access request by the UE is not affected.

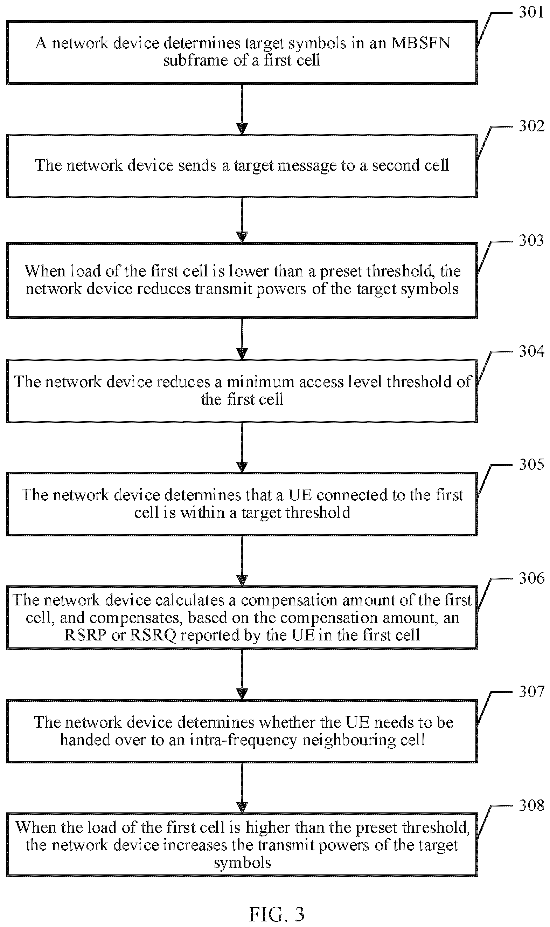

FIG. 3 is a diagram of another embodiment of an energy-saving method according to an embodiment of this application. In this embodiment, when a transmit power of a first cell is reduced, it may be further ensured as much as possible that the first cell does not suffer losses of traffic and users caused by the power reduction. The following provides detailed description with reference to FIG. 3. As shown in FIG. 3, the energy-saving method in this embodiment includes step 301 to step 308.

301: A network device determines target symbols in an MBSFN subframe of the first cell. Step 301 in this embodiment is similar to step 201 in the foregoing embodiment shown in FIG. 2. Details are not described herein again.

302: The network device sends a target message to a second cell.

As stipulated in the protocol 3GPP TS 36331, when an evolved multimedia broadcast multicast service (Evolved Multimedia Broadcast Multicast Service, eMBMS) cell is present in a neighbouring cell of a cell, the cell notifies, through a system message, a UE in the cell that an eMBMS neighbouring cell is present peripherally. Therefore, when measuring coverage signal strength of the neighbouring cell, the UE in the cell measures only a CRS symbol that is in a non-MBSNF subframe of the neighbouring cell.

Based on this, the network device may send, through an X2 interface, the target message to a neighbouring cell (namely, the second cell) that has a handover relationship with the first cell. The target message is used for notifying the second cell that an eMBMS cell is present in a neighbouring cell of the second cell. After the second cell receives the target message, when measuring coverage signal strength of the first cell, a UE in the second cell measures only a CRS symbol that is in a non-MBSNF subframe of the neighbouring cell. The network device does not adjust a transmit power of the symbol. Therefore, before and after the network device adjusts the transmit power of the first cell, the coverage signal strength that is of the first cell and that is measured by the UE in the second cell does not change, and reselection and handover of the UE in the second cell to the first cell are not affected.

After receiving the target message, the second cell broadcasts, through a system message, the target message to the UE connected to the second cell. Specifically, the UE of the second cell may be notified through broadcast through a neighCellConfig field in SIB3 and SIB5 messages of the second cell. Definition of the field is as follows:
00: Not all neighbour cells have the same MBSFN subframe allocation as the serving cell on this frequency, if configured, and as the PCell otherwise//Not all neighbour cells have the same MBSFN subframe allocation as a serving cell on this frequency (if configured), and as the primary cell otherwise.

10: The MBSFN subframe allocations of all neighbour cells are identical to or subsets of that in the serving cell on this frequency, if configured, and of that in the PCell otherwise//MBSFN subframe allocations of all neighboring cells are identical to or a subset of that in a serving cell on this frequency (if configured), and of that in the primary cell otherwise.

01: No MBSFN subframes are present in all neighbour cells//No MBSFN subframe are present in all neighboring cells.

11: Different UL/DL allocation in neighbouring cells for TDD compared to the serving cell on this frequency, if configured, and compared to the PCell otherwise//If configured, there is different UL/DL allocation in neighbouring cells for TDD compared to a serving cell on this frequency, and compared to the primary cell otherwise.

It can be learned from the definition of the field that, the UE connected to the second cell may be notified, by configuring the field as 00, that the eMBMS neighbouring cell is present.

It should be noted that, in some possible solutions, when measuring coverage signal strength of the eMBMS neighbouring cell, in addition to measuring the CRS symbol that is in the non-MBSFN subframe, the UE further measures a CRS symbol at a position of a symbol 0 in an MBSFN subframe. In this case, in step 301, that the target symbols do not include the CRS symbol at the position of the symbol 0 of the MBSFN subframe needs to be limited. Otherwise, when the network device reduces the transmit powers of the target symbols, a result of measuring the coverage signal strength of the first cell by the UE in the second cell is reduced, which affects handover of the UE in the second cell to the first cell for connection.

It may be understood that step 302 may be performed before step 303 or after step 303 in which the transmit powers of the target symbols are reduced. A time sequence of step 302 is not limited herein.

303: When load of the first cell is lower than a preset threshold, the network device reduces the transmit powers of the target symbols.

Step 303 in this embodiment is similar to step 202 in the foregoing embodiment shown in FIG. 2. Details are not described herein again.

304: The network device reduces a minimum access level threshold of the first cell.

Reducing the transmit powers of the target symbols (the CRS symbol) of the first cell causes a decrease in the coverage signal strength that is of the first cell and that is measured by the UE in the first cell. The coverage signal strength is mainly an RSRP value or an RSRQ value. However, the UE in an idle state does not continuously measure the CRS symbol, and the UE in the idle state remains asleep for a period of time, and then periodically wakes up to measure a signal of a cell. A wake-up time window does not have a constant length, but includes a constant normal subframe (namely, a non-MBSFN subframe), because the normal subframe includes information such as a master information block (Master Information Block, MIB), a primary synchronization signal (Primary Synchronization Signal, PSS), and paging (Paging), and the UE needs the information to implement basic functions such as synchronization and paging message reading. Therefore, reducing the transmit powers of the target symbols does not cause the UE in the idle state not to find the signal of the first cell.

However, in an actual application, a minimum access level threshold is generally set for a cell, and a decrease in coverage signal strength may cause an RSRP value or an RSRQ value obtained by the UE in the idle state through measurement to be lower than the minimum access level threshold, which causes the UE in the idle state to be disconnected from a network. In view of this, after reducing the transmit powers of the target symbols, the network device obtains a compensation amount of RSRP of the first cell or a compensation amount of RSRQ of the first cell, reduces the minimum access level threshold of the first cell based on the compensation amount of the RSRP or the compensation amount of the RSRQ, and notifies the UE through a system message, so that the RSRP value or the RSRQ value actually obtained by the UE through measurement is higher than a reduced minimum access level threshold, to ensure that the UE in the idle state is not disconnected from the network. A method for obtaining the compensation amount of the RSRP of the first cell or the compensation amount of the RSRQ of the first cell by the network device is described in step 306.

305: The network device determines that the UE connected to the first cell is within a target threshold.

For a UE in a connected state, a decrease in coverage signal strength of a cell may cause a UE at an edge area to trigger an inter-frequency or inter-system handover in advance, which affects cell traffic and a key performance indicator (Key Performance Indicator, KPI). For example, call interruption occurs. Therefore, the UE needs to be prevented from being handed over to an inter-frequency or inter-system cell in advance as much as possible.

In view of this, the network device may set the target threshold. The target threshold is higher than the minimum access level threshold of the first cell. Certainly, in addition to the minimum access level threshold, another threshold that can indicate a cell edge feature may alternatively be used, which is not specifically limited herein. The network device reduces the transmit powers of the target symbols only when strength of all signals of UEs connected to the first cell is higher than the target threshold. When strength of a signal of a UE is lower than the target threshold, the network device stops reducing the transmit powers of the target symbols, so that the coverage signal strength of the first cell is no longer reduced. When the strength that is of the signal and that is reported by the UE is higher than the target threshold again, the network device may continue to reduce the transmit powers, to ensure that the UE does not trigger, due to decrease in the coverage signal strength, the inter-frequency or inter-system handover in advance, thereby avoiding a KPI risk such as a traffic loss or a call drop.

306: The network device calculates a compensation amount of the first cell, and compensates, based on the compensation amount, the RSRP or the RSRQ reported by the UE in the first cell.

Compared with the inter-frequency or inter-system cell handover, an intra-frequency cell handover has less impact on services and there are more UEs that trigger the intra-frequency cell handover. Therefore, stopping reducing the transmit powers of the target symbols immediately when a UE is outside the target threshold, as in the inter-frequency or inter-system cell handover, cannot be performed.

For the intra-frequency cell handover, the network device calculates a ratio of a decrement (at a time dimension) of CRS symbols at Port0 and Port1 and a ratio of a reduction amplitude in a periodicity, and obtains the compensation amount in a linear calculation manner. The compensation amount includes an RSRP compensation value or an RSRQ compensation value, and is converted into a value in a dB domain (δ). The following uses an FDD mode as an example for description.

The network device obtains the compensation amount based on a TTI quantity (CRS Down TTI), a quantity of CRS symbols (CRS Down TTI, which is a decrement of three or four), and a linear power reduction ratio (CRS Down Power Ratio) for performing power reduction in a historical statistical periodicity. A calculation formula is as follows:
RSRP/RSRQ compensation amount δ (dB)=10*(-log(((CRS Down TTI*3)*(CRS Down Power Ratio)+CRS Down TTI*1+(Total DL Tti-CRS Down TTI)*3)/(Total DL TTI*3))). A compensation value is obtained through calculation, and is equal to -1.1 dB.

After obtaining the compensation amount of the first cell through calculation, the network device compensates, based on the compensation amount, the RSRP or the RSRQ reported by the UE in the first cell. The RSRP or the RSRQ is carried in a handover request event.

307: The network device determines whether the UE needs to be handed over to an intra-frequency neighbouring cell.

When triggering an intra-frequency cell handover, the UE in the first cell sends a handover request to the network device. The handover request carries strength (RSRP or RSRQ) of the signal that is of the first cell and that is measured by the UE and strength of a signal of the intra-frequency neighbouring cell. After performing compensation repair on the RSRP or RSRQ that is of the first cell and that is measured and reported by the UE, the network device determines whether the UE needs to be handed over to the intra-frequency neighbouring cell. Specifically, if strength of a signal of the UE in the first cell after a compensation check actually does not meet an intra-frequency handover threshold requirement, the network device does not perform handover of the UE. Only if the strength of the signal of the UE in the first cell after the compensation check is low indeed, and can meet an intra-frequency handover threshold requirement, the network device actually performs handover of the UE. For example, an intra-frequency handover threshold is 3 dB, an RSRP value that is of the first cell and that is obtained by the UE through measurement is -95 dBm, an RSRP value of the intra-frequency neighbouring cell to be handed over is -91 dBm, and a difference between the two values is greater than 3 dB. However, in this case, a coverage compensation amount is 2 dB, so that the RSRP value that is of the first cell and that is obtained by the UE through measurement is restored to -93 dBm after compensation, and a difference between the RSRP value of the first cell and the RSRP value of the intra-frequency neighbouring cell is less than 3 dB. The handover threshold is not actually met, and the network device does not need to perform handover of the UE.

308: When the load of the first cell is higher than the preset threshold, the network device increases the transmit powers of the target symbols.

Step 308 in this embodiment is similar to step 203 in the foregoing embodiment shown in FIG. 2. Details are not described herein again.

In this embodiment, in addition to quickly adjusting a transmit power of a cell, a network device may further maintain unchanged measurement of a signal of the cell by a UE in a neighbouring cell, without affecting mobility functions such as reselection and handover of the UE in the neighbouring cell to the cell. In addition, the network device can prevent, as much as possible, a UE in the cell from being handed over to another cell in advance. This prevents losses of traffic and users and ensures stable basic KPIs such as the call drop and handover. In addition, the network device may automatically adjust the transmit power of the cell based on a preset cell load threshold, and may further automatically stop reducing the transmit power of the cell or continue to reduce the transmit power of the cell based on a status of the UE in the cell, without complex manual intervention and processing, thereby reducing application difficulty.

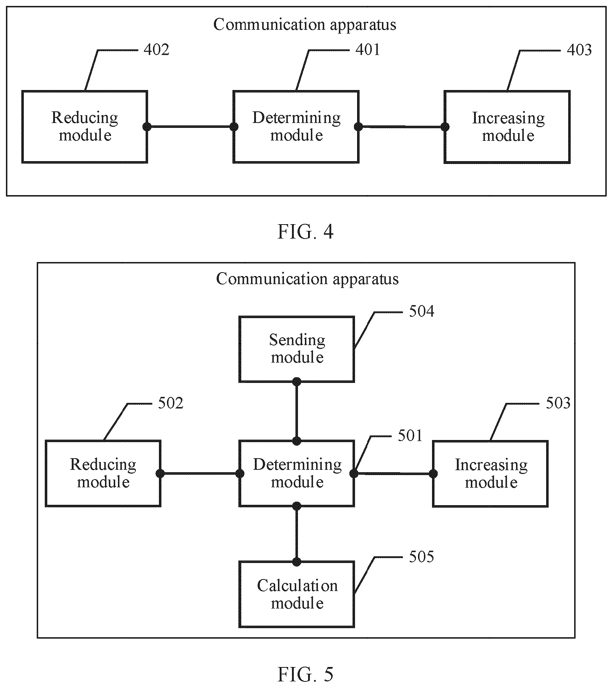

The foregoing describes the energy-saving method in embodiments of this application. The following describes the communication apparatus in embodiments of this application. Refer to FIG. 4. An embodiment of the communication apparatus in embodiments of this application includes:
a determining module 401, configured to determine target symbols in a multimedia broadcast multicast service single frequency network MBSFN subframe of a first cell, where the target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE;
a reducing module 402, configured to reduce transmit powers of the target symbols when load of the first cell is lower than a preset threshold; and
an increasing module 403, configured to increase the transmit powers of the target symbols when the load of the first cell is higher than the preset threshold.

The following describes in detail the communication apparatus in embodiments of this application. Refer to FIG. 5. Another embodiment of the communication apparatus in embodiments of this application includes:
a determining module 501, configured to determine target symbols in a multimedia broadcast multicast service single frequency network MBSFN subframe of a first cell, where the target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE;
a reducing module 502, configured to reduce transmit powers of the target symbols when load of the first cell is lower than a preset threshold; and
an increasing module 503, configured to increase the transmit powers of the target symbols when the load of the first cell is higher than the preset threshold.

Optionally, the MBSFN subframe does not carry a system information block SIB message, a paging Paging message, a message 2 MSG2, or a message 4 MSG4 of the first cell.

Optionally, the target symbols do not include symbols in a physical control format indicator channel PCFICH and a physical hybrid automatic repeat indicator channel PHICH, or a common PDCCH symbol and a channel state reference signal CSIRS symbol of the first cell.

Optionally, the PDSCH symbol does not include a voice over long-term evolution VoLTE symbol, a signaling radio bearer 1 SRB 1 symbol, or a signaling radio bearer 2 SRB2 symbol.

Optionally, the CRS symbol is located outside a position of a symbol 0 of the MBSFN subframe.

Optionally, the communication apparatus further includes a sending module 504, configured to send a target message to a second cell. The target message indicates that an evolved multimedia broadcast multicast service eMBMS cell is present in a neighbouring cell that has a handover relationship with the second cell, and the neighbouring cell includes the first cell.

Optionally, the determining module 501 is further configured to determine that strength of a signal received by a UE in the first cell is higher than a target threshold of the first cell. The target threshold is higher than a minimum access level threshold of the first cell.

Optionally, the communication apparatus further includes a calculation module 505, configured to: calculate a compensation amount of a reference signal received power RSRP or a compensation amount of reference signal received quality RSRQ of the first cell; and compensate, based on the compensation amount of the RSRP or the compensation amount of the RSRQ, the RSRP or the RSRQ reported by the UE in the first cell.

Optionally, the reducing module 502 is further configured to reduce the minimum access level threshold of the first cell based on the compensation amount of the RSRP or the compensation amount of the RSRQ.

In this embodiment, units in the communication apparatus perform operations of the communication apparatus in embodiments shown in FIG. 2 and FIG. 3. Details are not described herein again.

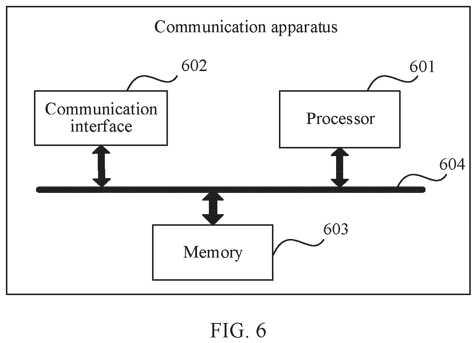

FIG. 6 is a possible diagram of a structure of a communication apparatus according to an embodiment of this application. The communication apparatus includes a processor 601, a communication interface 602, a memory 603, and a bus 604. The processor 601, the communication interface 602, and the memory 603 are connected to each other through the bus 604. In embodiments of this application, the processor 601 is configured to control and manage an action of the communication apparatus. For example, the processor 601 is configured to perform the steps in the method embodiments in FIG. 2 and FIG. 3. The communication interface 602 is configured to support the communication apparatus in communication. The memory 603 is configured to store program code and data of the communication apparatus.

The processor 601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination of one or more microprocessors, or a combination of the digital signal processor and a microprocessor. The bus 604 may be a peripheral component interconnect (Peripheral Component Interconnect, PCI) bus, an extended industry standard architecture (Extended Industry Standard Architecture, EISA) bus, or the like. The bus may include an address bus, a data bus, a control bus, and the like. For ease of representation, the bus is indicated by only one bold line in FIG. 6. However, it does not indicate that there is only one bus or only one type of bus.

An embodiment of this application further provides a computer-readable storage medium. The computer-readable storage medium includes instructions. When the instructions are run on a computer, the computer is enabled to perform the methods according to embodiments shown in FIG. 2 and FIG. 3.

An embodiment of this application further provides a computer program product including instructions. When the computer program product is run on a computer, the computer is enabled to perform the methods in embodiments shown in FIG. 2 and FIG. 3.

An embodiment of this application further provides a chip system. The chip system includes at least one processor and a communication interface. The communication interface and the at least one processor are interconnected through a line. The at least one processor is configured to run a computer program or instructions, to perform the methods in embodiments shown in FIG. 2 and FIG. 3.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the apparatus embodiments described above are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An energy-saving method, comprising:
determining, by a network device, target symbols in a multimedia broadcast multicast service single frequency network MBSFN subframe of a first cell, wherein the target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE;
when load of the first cell is lower than a preset threshold, reducing, by the network device, transmit powers of the target symbols; and
when the load of the first cell is higher than the preset threshold, increasing, by the network device, the transmit powers of the target symbols.

2. The method according to claim 1, wherein the MBSFN subframe does not carry a system information block SIB message, a paging Paging message, a message 2 MSG2, or a message 4 MSG4 of the first cell.

3. The method according to claim 1 or 2, wherein the target symbols do not comprise symbols in a physical control format indicator channel PCFICH and a physical hybrid automatic repeat indicator channel PHICH, or a common PDCCH symbol and a channel state reference signal CSIRS symbol of the first cell.

4. The method according to any one of claims 1 to 3, wherein the PDSCH symbol does not comprise a voice over long-term evolution VoLTE symbol, a signaling radio bearer 1 SRB1 symbol, or a signaling radio bearer 2 SRB2 symbol.

5. The method according to any one of claims 1 to 4, wherein the CRS symbol is located outside a position of a symbol 0 of the MBSFN subframe.

6. The method according to any one of claims 1 to 5, wherein the method further comprises:
sending, by the network device, a target message to a second cell, wherein the target message indicates that an evolved multimedia broadcast multicast service eMBMS cell is present in a neighbouring cell that has a handover relationship with the second cell, and the neighbouring cell comprises the first cell.

7. The method according to any one of claims 1 to 6, wherein before the reducing, by the network device, transmit powers of the target symbols, the method further comprises:
determining, by the network device, that strength of a signal received by a UE in the first cell is higher than a target threshold of the first cell, wherein the target threshold is higher than a minimum access level threshold of the first cell.

8. The method according to any one of claims 1 to 7, wherein after the reducing, by the network device, transmit powers of the target symbols, the method further comprises:
calculating, by the network device, a compensation amount of a reference signal received power RSRP or a compensation amount of reference signal received quality RSRQ of the first cell; and
compensating, by the network device based on the compensation amount of the RSRP or the compensation amount of the RSRQ, the RSRP or the RSRQ reported by the UE in the first cell.

9. The method according to claim 8, wherein the method further comprises:
reducing, by the network device, the minimum access level threshold of the first cell based on the compensation amount of the RSRP or the compensation amount of the RSRQ.

10. A communication apparatus, comprising:
a determining module, configured to determine target symbols in a multimedia broadcast multicast service single frequency network MBSFN subframe of a first cell, wherein the target symbols are a cell-specific reference signal CRS symbol, a demodulation modulation reference signal DMRS symbol, a physical downlink control channel PDCCH symbol dedicated to a terminal device UE, and a physical downlink shared channel PDSCH symbol dedicated to the UE;
a reducing module, configured to reduce transmit powers of the target symbols when load of the first cell is lower than a preset threshold; and
an increasing module, configured to increase the transmit powers of the target symbols when the load of the first cell is higher than the preset threshold.

11. The apparatus according to claim 10, wherein the MBSFN subframe does not carry a system information block SIB message, a paging Paging message, a message 2 MSG2, or a message 4 MSG4 of the first cell.

12. The apparatus according to claim 10 or 11, wherein the target symbols do not comprise symbols in a physical control format indicator channel PCFICH and a physical hybrid automatic repeat indicator channel PHICH, or a common PDCCH symbol and a channel state reference signal CSIRS symbol of the first cell.

13. The apparatus according to any one of claims 10 to 12, wherein the PDSCH symbol does not comprise a voice over long-term evolution VoLTE symbol, a signaling radio bearer 1 SRB1 symbol, or a signaling radio bearer 2 SRB2 symbol.

14. The apparatus according to any one of claims 10 to 13, wherein the CRS symbol is located outside a position of a symbol 0 of the MBSFN subframe.

15. The apparatus according to any one of claims 10 to 14, wherein the apparatus further comprises a sending module, configured to send a target message to a second cell, wherein the target message indicates that an evolved multimedia broadcast multicast service eMBMS cell is present in a neighbouring cell that has a handover relationship with the second cell, and the neighbouring cell comprises the first cell.

16. The apparatus according to any one of claims 10 to 15, wherein the determining module is further configured to determine that strength of a signal received by a UE in the first cell is higher than a target threshold of the first cell, wherein the target threshold is higher than a minimum access level threshold of the first cell.

17. The apparatus according to any one of claims 10 to 16, wherein the apparatus further comprises a calculation module, configured to: calculate a compensation amount of a reference signal received power RSRP or a compensation amount of reference signal received quality RSRQ of the first cell; and compensate, based on the compensation amount of the RSRP or the compensation amount of the RSRQ, the RSRP or the RSRQ reported by the UE in the first cell.

18. The apparatus according to claim 17, wherein the reducing module is further configured to reduce the minimum access level threshold of the first cell based on the compensation amount of the RSRP or the compensation amount of the RSRQ.

19. A communication apparatus, comprising at least one processor and an interface circuit, wherein
the interface circuit is configured to provide a program or instructions for the at least one processor; and
the at least one processor is configured to execute the program or the instructions, to enable the communication apparatus to implement the method according to any one of claims 1 to 9.

20. A computer-readable storage medium, wherein the computer-readable storage medium stores instructions; and when the instructions are executed by a computer, the method according to any one of claims 1 to 9 is implemented.

21. A computer program product, comprising instructions, wherein when the instructions are run on a computer, the computer is enabled to perform the method according to any one of claims 1 to 9.
